Europäisches Patentamt

European Patent Office

Office européen des brevets

(11) Publication number: **0 407 611 A1**

# EUROPEAN PATENT APPLICATION
## published in accordance with Art. 158(3) EPC

(21) Application number: **90901901.0**

(22) Date of filing: **17.01.90**

(86) International application number:
**PCT/JP90/00043**

(87) International publication number:
**WO 90/08991 (09.08.90 90/19)**

(51) Int. Cl.5: **G05B 19/405, G06F 3/02**

(30) Priority: **25.01.89 JP 14165/89**

(43) Date of publication of application:
**16.01.91 Bulletin 91/03**

(84) Designated Contracting States:
**DE FR GB**

(71) Applicant: **FANUC LTD.**
**3580, Shibokusa Aza-Komanba, Oshino-mura Minamitsuru-gun, Yamanashi 401-05(JP)**

(72) Inventor: **SEKI, Masaki**
**3-15-2-406, Takaidonishi Suginami-ku Tokyo 168(JP)**
Inventor: **TAKEGAHARA, Takashi**
**256-2, Nishiteragata-machi Hachioji-shi Tokyo 192-01(JP)**
Inventor: **MATSUNAKA, T. R.8-305, F. Manshonharimomi,33511-1**
**Shibokusa, Oshino-mura Minamitsuru-gun Yamanashi 401-05(JP)**

(74) Representative: **Billington, Lawrence Emlyn et al**
**Haseltine Lake & Co Hazlitt House 28, Southampton Buildings Chancery Laneane London WC2A 1AT(GB)**

(54) **AUTOMATIC PROGRAMMING APPARATUS.**

(57) An automatic programming apparatus which enables any command name to be entered into a tablet menu and which is featured by excellent program preparation efficiency. In the registration mode, one of the entry columns in a first group of a tablet menu (8b) is picked up and is input through the operation of a tablet cursor (8c) by the operator. Then, a macro name is stored in a data region corresponding to the picked-up input in a look-up table in a memory (3) and a corresponding macro instruction is stored in the memory every time when the macro name is input by manipulating the keyboard (5). In the execution mode, the processor reads the macro instruction corresponding to the macro name found by the table retrieval and executes it every time when the macro name is picked up on the tablet menu and is input, and further reads and executes the macro instruction that has been stored in advance in the programming apparatus every time when a macro name having high utility other than the above macro name is picked up and is input. The program can be efficiently prepared depending

upon the macro name that is quickly imput via the
tablet menu.

# FIG.1

- 1 -

SPECIFICATION
AUTOMATIC PROGRAMMING APPARATUS

The present invention relates to an automatic programming apparatus, and more particularly, to an automatic programming apparatus capable of inputting various commands to a processor through a tablet menu during preparation of a program, thereby permitting efficient program preparation.

Background Art

An automatic programming apparatus is known, which comprises a tablet menu for setting and indicating various command names respectively specifying various commands, and which is arranged to input a command, corresponding to a command name specified on the tablet menu by an operator's tablet cursor operation, into a processor accommodated in the programming apparatus. According to the programming apparatus of this kind, efficient program preparation is permitted by the use of the tablet menu.

However, the number of the command names which are permitted to be set in the tablet menu is limited. In this respect, generally, a group of command names, representative of a command group for the preparation of programs for achieving typical control functions of versatile control systems, is set in the tablet menu. On the other hand, various control functions are provided for control systems which are employed by individual users. As a consequence, a command name indicative of a command, corresponding to a control function frequently employed in the user's system, is sometimes uncontained in the tablet menu. In this case, an operator is required, for instance, to operate a keyboard each time such command is to be input. Accordingly, the advantage of the automatic programming

- 2 -

apparatus of efficiently preparing a program by the use of the tablet menu is spoiled.

## Disclosure of the Invention

The object of the present invention is to provide an automatic programming apparatus, which is arranged to permit setting of arbitrary command names in a tablet menu, and which is excellent in program preparation efficiency.

In order to achieve the aforementioned object, an automatic programming apparatus of the present invention comprises a tablet menu provided with a group of setting columns, means for determining a group of arbitrary command names to be set in the setting column group, means for registering the thus determined arbitrary command name group and a group of arbitrary commands specified by the arbitrary command name group, means for specifying, on the tablet menu, each command name of the arbitrary command name group, and means for reading out from the registration means and for executing an associated one of the commands when any command name of the arbitrary command name group is specified.

As mentioned above, according to the automatic programming apparatus of the present invention, a group of arbitrary command names is permitted to be set on the tablet menu, and, when any command name of the arbitrary command name group is specified, a corresponding one of a group of arbitrary commands registered together with the arbitrary command name group is read out and executed. Accordingly, even when a program for achieving particular control functions of a particular control system other than a versatile control system is prepared, it is possible to rapidly input various commands for the preparation of the

- 3 -

program into the automatic programming apparatus through the tablet menu, whereby various kinds of programs can be efficiently prepared. In other words, the automatic programming apparatus of the present invention is adapted for various types of control systems employed by individual users, and hence the advantage of the programming apparatus of permitting efficient command input to the programming apparatus through the tablet menu never be spoiled.

Brief Description of the Drawings

Fig. 1 is a schematic diagram showing an essential part of an automatic programming apparatus according to an embodiment of the present invention;

Fig. 2 is a flowchart showing a program preparation process performed by the apparatus of Fig. 1;

Fig. 3 is a diagram showing, by way of example, a look-up table for storing macro names, stored in a random access memory (RAM) shown in Fig. 1; and

Fig. 4 is a diagram showing, by way of example, a storage state of the macro commands in the RAM of Fig. 1.

Best Mode of Carrying Out the Invention

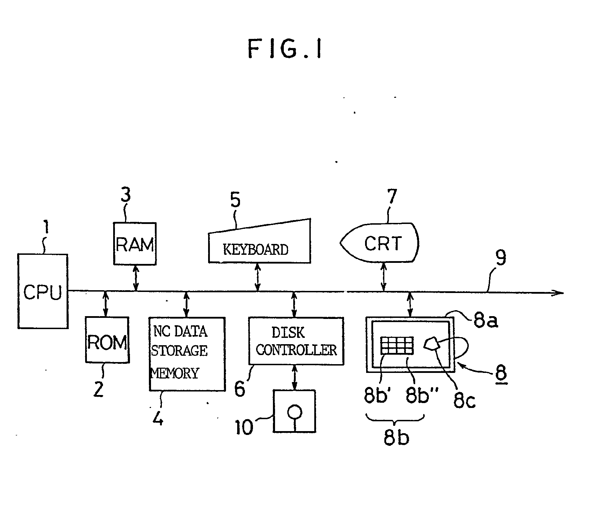

Referring to Fig. 1, an automatic programming apparatus according to an embodiment of the present invention, which is arranged to automatically prepare various programs such as a machining program for operation of various machine tools equipped with a control unit, e.g., a numerically controlled machine tool, comprises a processor 1, a read-only memory (ROM) 2 storing therein a program for control of the programming apparatus, a random access memory (RAM) 3 for storing calculation results by the processor, and a memory for storing NC data. The programming apparatus

- 4 -

further includes a keyboard 5, a disk controller 6, a graphic display device (CRT) 7, and a tablet 8. The aforesaid elements 2 - 8 are connected to the processor 1 through busses 9, and the disk controller 6 is arranged to be loaded with a floppy 10 storing therein a system program.

The tablet 8 is provided at its tablet face 8a with a tablet menu 8b which includes first and second groups of setting columns (items) 8b' and 8b". The second group of setting columns is. arranged to permit setting of a second group of command names (in this embodiment, macro names). Preferably, this second command name group is utilized for specifying a second group of commands used for the preparation of that part of a program by which highly versatile control functions common to various control units are achieved. The second command name group and the second command group are stored, e.g., upon shipment of the programming apparatus, in address regions of the ROM 2 corresponding to the second setting column group in such a manner that each of the command names and an associated one of the commands are correlated with each other.

On the other hand, the first setting column group is arranged to permit setting of a first group of command names specifying a first group of commands other than the commands which constitute the second command group. (in this embodiment, macro commands) As mentioned later, the first command name group and the first command group are set by an user in an arbitrary manner. In this case, preferably, a group of commands for the preparation of that part of a program by which frequently employed control functions of the user's control unit is first set as the first command group, from the view point of improving the program preparation efficiency.

The automatic programming apparatus is operable in a registration mode for determining command names (macro names) to be respectively set in the first setting column group and for registering these command names and commands (macro commands) respectively specified by the command names, an erase mode for erasing required one or more macro names and/or one or more macro commands among the thus registered macro name group and macro command group, and an execution mode for executing various commands in sequence for the program preparation. In this connection, the keyboard 5 is provided with operation keys for selecting a desired one of these operating modes.

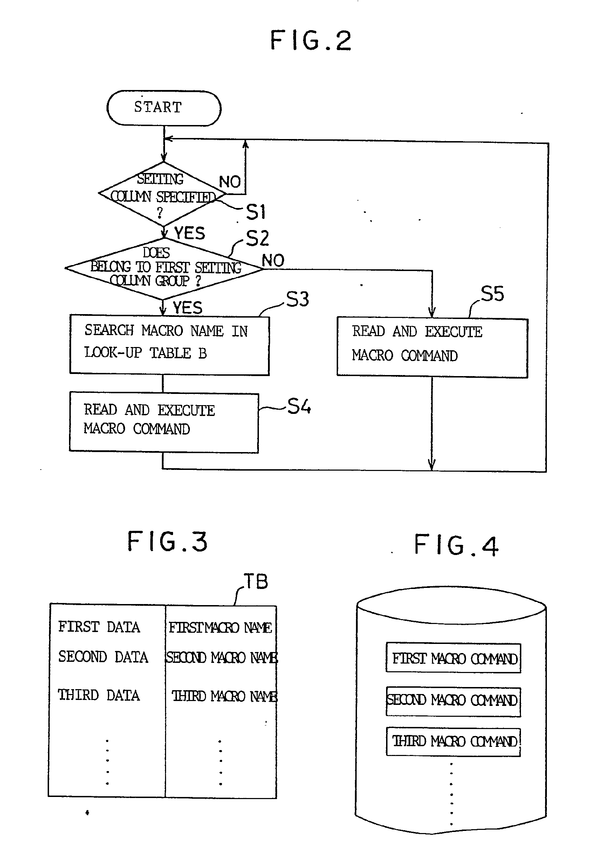

With reference to Figs. 2 - 4, the operation of the automatic programming apparatus of Fig. 1 will be explained.

Upon supply of electric power to the automatic programming apparatus, the system program is transferred from the floppy 10 to the RAM 3.

When the registration mode is selected by an operator's keyboard operation, the processor 1 waits for a further operator's operation. An operator moves a tablet cursor 8c so that the cursor is aligned with, e.g., a first setting column of the first setting column group of the tablet menu 8b, and then picks the first setting column. Next, the operator operates the keyboard 5 so as to input a first macro name to be set in the first setting column.

In response to the input of the first macro name, the processor 1 causes the first macro name to be stored in a first data region of a look-up table TB provided in the RAM 3 and shown in Fig. 3, together

- 6 -

with a first data indicative of the first setting column of the first setting column group. Further, as shown in Fig. 4, the processor causes a first macro command, corresponding to the first macro name, to be stored in an address region of the RAM 3 corresponding to the same macro name. At this time, the processor 1 determines the first macro command corresponding to the first macro name with reference to the look-up table (stored in the ROM 2, for instance) in which various macro commands and various macro names are stored in such a manner that each macro command and an associated one macro name are correlated with each other. After storage of the macro command, the processor 1 waits for the input of the next macro name.

Whereupon, the operator sequentially specifies the second setting column and the later columns of the first setting column group of the tablet menu 8b. Then, the operator inputs a macro name to be set in each of these setting columns through the keyboard 5 after specifying each setting column by the use of the tablet cursor 8c. The processor 1 sequentially causes the thus input macro names (second and third macro names are shown in Fig. 3) to be stored in the second data region and the later data regions of the look-up table TB, and sequentially causes corresponding macro commands (second and third macro commands are shown in Fig. 4) to be stored in the RAM 3.

Preferably, after assigning desired macro names in the respective setting columns 8b' of the tablet menu 8b in the aforesaid manner, the operator affixes labels, each indicative of associated one macro name, to these setting columns 8b' for convenience of input of the macro names in the execution mode (mentioned later).

- 7 -

When switching is made to the execution mode by means of a keyboard operation, the processor 1 starts a program preparation process of Fig. 2, and waits for an operator's pick operation of a macro name on the tablet menu 8b (step S1).

When the operator picks any one of the macro names in the tablet menu 8b by using the tablet cursor 8c to specify one of the setting columns, the processor determines whether or not the thus specified setting column belongs to the first setting column group (step S2). If the specified setting column belongs to the first setting column group, the processor 1 search for the look-up table TB in response to a signal supplied from the tablet 8 and indicative of the same setting column, to determine a macro name corresponding to the specified setting column (step S3). Next, the processor 1 reads out, from the RAM 3, a macro command corresponding to the macro name, and executes the same macro command (step S4), and then waits for the pick input of the next macro name.

On the other hand, it is determined at step S2 that the picked macro name (setting column) does not belong to the first setting column group, the processor 1 reads out, from the ROM 2, a corresponding one of the commands which constitute the second command group in response to a signal supplied from the tablet 8 and indicative of the setting column concerned, and the executes the command thus read, and then waits for the pick input of the next macro name. The process of Fig. 2 explained above is repeatedly carried out, whereby a program is prepared.

When the erase mode is selected by means of a keyboard operation, the processor 1 waits for the operator's pick input of a command name. When the

- 8 -

operator picks an unnecessary command name on the tablet menu 8b by the use of the tablet cursor 8c to thereby specify one of the setting columns, the processor 1 causes data indicative of the thus specified setting column and an associated command name to be erased, which have been heretofore stored in a data region of the look-up table TB corresponding to the specified setting column, and further causes the macro command to be erased, which corresponds to the aforementioned command name and has been heretofore stored in an address region of the RAM 3 corresponding to the same command name.

Meanwhile, after switching from the erase mode to the registration mode, it is possible to set a new data indicative of a setting column and a new command name in the aforesaid data region of the look-up table TB and to set a new macro command in the aforesaid address region of the RAM 3.

The present invention is not limited to the foregoing embodiment, but may be modified in various manners.

For instance, in the embodiment, a macro command arbitrarily set by the user is stored in an address region of the RAM 3 corresponding to a macro name. Alternatively, it may be possible to store the macro command in a corresponding data region of the look-up table TB, together with the macro name.

Further, in the embodiment, the operation mode of the automatic programming apparatus is selected by means of the keyboard operation. Alternatively, it may be possible to assign an operation mode selection function to a predetermined setting column of the tablet menu 8b so as to select the operation mode by the use of the tablet 8.

- 9 -

# C L A I M S

1. An automatic programming apparatus comprising:

a tablet menu provided with a group of setting columns;

means for determining a group of arbitrary command names to be set in the setting column group;

means for registering the thus determined arbitrary command name group and a group of arbitrary commands specified by the arbitrary command name group;

means for specifying, on said tablet menu, each command name of said arbitrary command name group; and

means for reading out from said registration means and for executing an associated one of the commands when any command name of the arbitrary command name group is specified.

2. An automatic programming apparatus according to claim 1, wherein said tablet menu includes a second group of setting columns for setting a second group of command names for specifying a second group of versatile commands, and said execution means is operable to read out from said registration means and execute an associated one command of the second command group, stored in said registration means in a manner correlated with the second setting column group, when any command name of the second command name group is specified on said tablet menu by said specifying means.

3. An automatic programming apparatus according to claim 1 or 2, wherein said setting column group consists of at least one setting column.

# FIG.1

# FIG.2

```
                    ┌─────────────┐
                    │    START    │
                    └──────┬──────┘
                           │
                           ▼
                      ╱─────────╲        NO
                    ╱  SETTING    ╲─────────────┐
                   ╱ COLUMN SPECIFIED╲          │
                    ╲      ?      ╱   S1         │
                      ╲─────────╱                │
                           │ YES      S2         │
                           ▼                     │
                      ╱─────────╲                │
                    ╱    DOES     ╲     NO        │
                   ╱BELONG TO FIRST SETTING╲──────┼──────┐
                    ╲ COLUMN GROUP ? ╱            │      │
                      ╲─────────╱                 │      │
                           │ YES    S3            │      ▼  S5
              ┌────────────▼────────────┐    ┌─────────────────┐
              │ SEARCH MACRO NAME IN    │    │ READ AND EXECUTE│
              │ LOOK-UP TABLE B         │    │ MACRO COMMAND   │
              └────────────┬────────────┘    └────────┬────────┘
                           │         S4               │
              ┌────────────▼────────────┐             │
              │ READ AND EXECUTE        │             │
              │ MACRO COMMAND           │             │
              └────────────┬────────────┘             │
                           │                          │
                           └──────────────────────────┘
```

# FIG.3

TB

| FIRST DATA | FIRST MACRO NAME |
|------------|------------------|
| SECOND DATA | SECOND MACRO NAME |
| THIRD DATA | THIRD MACRO NAME |
| ⋮ | ⋮ |

# FIG.4

FIRST MACRO COMMAND

SECOND MACRO COMMAND

THIRD MACRO COMMAND

⋮

**I. CLASSIFICATION OF SUBJECT MATTER** (if several classification symbols apply, indicate all) 6

According to International Patent Classification (IPC) or to both National Classification and IPC

Int. Cl$^5$    G05B19/405, G06F3/02

**II. FIELDS SEARCHED**

| Minimum Documentation Searched 7 | |
|---|---|
| Classification System | Classification Symbols |
| IPC | G05B19/405, 19/403, G06F3/02 |

Documentation Searched other than Minimum Documentation
to the Extent that such Documents are Included in the Fields Searched 8

| | |
|---|---|
| Jitsuyo Shinan Koho | 1971 – 1989 |
| Kokai Jitsuyo Shinan Koho | 1971 – 1989 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 58-166433 (Fujitsu Limited), 1 October 1983 (01. 10. 83) (Family: none) | 1 – 3 |
| Y | JP, A, 58-149579 (Fujitsu Fanuc, Ltd.), 5 September 1983 (05. 09. 83) (Family: none) | 1 – 3 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| April 9, 1990 (09. 04. 90) | April 23, 1990 (23. 04. 90) |
| International Searching Authority | Signature of Authorized Officer |
| Japanese Patent Office | |